# DEMANDE DE BREVET EUROPEEN

(11) **EP 1 065 896 A1**
(43) Date de publication de la demande: **03.01.2001**
(21) Numéro de dépôt: 00401660.6
(22) Date de dépôt: 13.06.2000
(51) Int. Cl.: H04Q 3/66

(54) **Procédé de sélection d'un des accès possibles sur une artère à signalisation dynamique entre deux autocommutateurs**

(30) Priorité: 01.07.1999 FR 9908459
(71) Demandeur: ALCATEL, 75008 Paris (FR)
(72) Inventeur: Laroque, Christian, 60599 Frankfurt am Main (DE); Tran, Nhut Quan, 95800 Cergy (FR)
(74) Mandataire: Sciaux, Edmond

(57) **Abrégé**

L'invention propose donc un procédé de sélection d'un accès (A1,...,An) parmi plusieurs possibles sur une artère (2) à signalisation dynamique reliant deux autocommutateurs (1, 1') d'un réseau de télécommunications.

Selon une caractéristique de l'invention, ce procédé prévoit que la sélection d'un accès pour une communication est effectuée dynamiquement en fonction de critères de coût d'établissement d'accès, de coût à la durée d'accès et de durée probable de la communication.

## Description

L'invention concerne un procédé de sélection d'un accès parmi plusieurs possibles sur une artère à signalisation dynamique reliant deux autocommutateurs d'un réseau de télécommunications.

Antérieurement, pour des raisons de sécurité et pour éviter un blocage en cas de défaillance au niveau d'une liaison, les communications établies entre des autocommutateurs dans un réseau de télécommunications étaient réparties sur les différents accès aux liaisons permettant à un autocommutateur de communiquer avec un autre, en particulier en matière de signalisation. Ceci n'a pas d'inconvénient, lorsque les liaisons et donc leurs accès sont ou doivent être maintenus en permanence actifs et ont donc un même coût que les liaisons soient exploitées à des fins de communication ou non. Il est apparu depuis, notamment en liaison avec l'évolution technique, qu'il existait des techniques qui permettaient de se dispenser de maintenir en permanence des liaisons et leurs accès actifs, lorsqu'ils ne sont pas nécessaires à l'écoulement du trafic et en particulier dans le cas des échanges de signalisation entre autocommutateurs. Aussi à partir du moment où une artère entre deux autocommutateurs est de type à signalisation dynamique dans la mesure où elle offre au moins deux possibilités d'accès distinctes dont au moins une avec possibilité de mise à l'état inactif de l'accès correspondant, il devient intéressant d'exploiter cette possibilité lorsque le trafic le permet, afin de réduire les coûts d'exploitation.

L'invention propose donc un procédé de sélection d'un accès parmi plusieurs possibles sur une artère à signalisation dynamique reliant deux autocommutateurs d'un réseau de télécommunications.

Selon une caractéristique de l'invention, ce procédé prévoit que la sélection d'un accès pour une communication est effectuée dynamiquement en fonction de critères de coût d'établissement d'accès et d'un critère de coût à la durée de signalisation par accès.

Selon une caractéristique de l'invention, la sélection d'un accès pour une communication comporte une pluralité d'opérations successives visant à trouver un accès dont le coût d'établissement est le plus faible possible parmi plusieurs possibilités et prioritairement un accès qui, pour le niveau de coût le plus faible possible, présente un canal de signalisation déjà établi et dispose d'au moins un canal de communication disponible.

Selon une caractéristique de l'invention, il est prévu de sélectionner un accès qui, pour le niveau de coût le plus faible possible, présente un canal de signalisation à établir, à défaut d'avoir un tel canal de signalisation déjà établi.

Selon une caractéristique de l'invention, la sélection d'un accès est effectuée en fonction de la durée supposée de la communication à établir en fonction d'analyses préalables du trafic, pour les accès qui sont choisis à défaut d'un accès moins coûteux.

Selon une caractéristique de l'invention, la sélection d'une voie de communication pour une communication, estimée de longue durée, entraîne la réservation de voies de communication, disponibles au niveau de cet accès, pour de futures communications de longue durée.

L'invention, ses caractéristiques et ses avantages sont précisés dans la description qui suit en liaison avec la figure évoquée ci-dessous.

La figure unique présente un schéma de principe d'une structure à deux autocommutateurs d'un réseau de télécommunications.

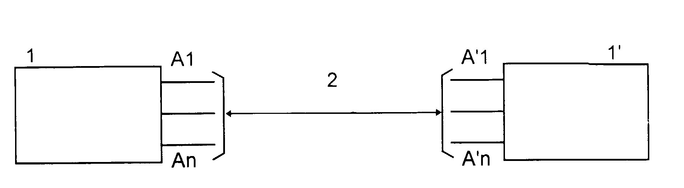

Le procédé de sélection d'un accès à une artère à signalisation dynamique est destiné à s'appliquer entre des autocommutateurs, ou PABX, d'un réseau de télécommunications, tels que les deux autocommutateurs 1 et 1' schématisés sur la figure unique. Comme il est connu ces autocommutateurs sont reliés entre eux par une artère 2 qui est supposée composée de liaisons permettant l'établissement de communications, notamment voix et/ou données entre des usagers, dans le cas d'exploitation envisagé. Les liaisons qui composent l'artère 2 sont susceptibles d'être d'exploitation et éventuellement de nature différentes et chacun des autocommutateurs est supposé disposer d'accès spécifiques prévus chacun pour permettre l'utilisation d'une liaison d'une exploitation et d'une nature déterminées. Ces accès sont symbolisés sous les références A1,...., An pour l'autocommutateur 1 et sous les références A'1, ....A'n pour l'autocommutateur 1' sur la figure 1.

Dans l'exemple proposé, il est considéré que les accès à l'artère 2 pour chacun des autocommutateurs 1 et 1' sont caractérisés par un critère en matière de coût d'établissement et par un critère de coût à la durée.

Le coût d'établissement et le coût à la durée sont susceptibles de varier suivant les différents opérateurs qui gèrent les liaisons constituant l'artère 2, lorsque celles-ci ne sont pas toutes gérées de manière identique. Ils peuvent être nuls pour certains accès, par exemple si les liaisons desservies par ces accès sont des liaisons d'un réseau privé dont font partie les deux autocommutateurs 1 et 1'.

Le coût d'établissement peut être caractérisé comme élevé, si par exemple l'accès s'effectue dans des conditions de signalisation payante et qu'il est établi à la demande et au cas par cas sur une liaison qui appartient à un opérateur autre que celui dont dépendent l'un et/ou l'autre des autocommutateurs.

Dans l'exemple proposé, il est prévu de classer les accès de manière à les répartir en trois catégories selon les critères de coût à l'établissement et de coût à la durée, ces catégories correspondant respectivement à un coût nul, un coût faible et un coût élevé.

Une base de données au niveau de chacun des autocommutateurs reçoit et stocke les données relatives aux coûts propres à chaque accès et il est prévu qu'un même coût soit attribué à chacun des accès relatifs à une même liaison au niveau des deux autocommutateurs qu'elle dessert.

Un autre critère pris en compte est la durée de la communication qui est ici déterminée à partir d'une base statistique et en fonction des données de gestion dans la mesure où l'analyse du trafic précédemment écoulé au cours du temps permet d'établir une estimation de l'évolution du trafic à venir en fonction du trafic passé, comme il est connu et d'une manière qui ne sera pas développée ici.

Un critère supplémentaire également pris en compte pour la sélection d'un accès à une artère parmi plusieurs possibles est fondé sur l'existence ou non d'un canal libre et notamment d'un canal voix libre dans le cas de communication voix et /ou données par un tel canal. L'absence de canal libre sur une liaison établie au moment d'une demande d'établissement d'une communication conduit en effet à un exploiter, par défaut, un accès alors inexploité dont le coût d'établissement peut éventuellement être élevé.

Selon l'invention, le procédé de sélection d'accès à une artère reliant deux autocommutateurs est pris en compte par des moyens logiciels de sélection d'accès qui sont préférablement contenus dans les mémoires du système de gestion programmé de l'autocommutateur et qui sont mis en oeuvre par ce système.

Le déroulement de ce procédé est par exemple tel que défini ci-dessous.

A l'occasion d'une demande d'établissement d'une communication par un usager de l'un des deux autocommutateurs, tel 1, à destination d'un usager susceptible d'être atteint par l'intermédiaire de l'autre autocommutateur, tel 1', la mise en oeuvre du procédé est déclenchée.

Une première opération est déclenchée par les moyens logiciels de sélection d'accès en liaison avec les autres moyens de gestion de l'autocommutateur qui a reçu la demande d'établissement. Cette première opération a pour objet de déterminer au niveau de l'autocommutateur recevant la demande, s'il existe un des accès à l'artère 2 qui soit un accès à coût nul, tant en matière d'établissement de signalisation qu'en matière de durée, parmi les éventuels accès de cette catégorie et si, dans ce cas, il existe un canal libre permettant d'écouler cette communication, via cet accès. Dans l'exemple envisagé, il est considéré que le canal demandé est un canal voix. Il est bien entendu prévu des mécanismes de détermination de priorité, connus en eux-mêmes, si plusieurs accès et/ou plusieurs canaux de communication répondent aux critères de sélection définies ci-dessus.

Si un tel accès dispose d'un canal disponible pour la communication à établir, cet accès est immédiatement choisi. Ce choix est suivi de manière connue en soi par l'envoi d'une signalisation d'établissement de communication vers l'autocommutateur 1', si le canal de signalisation exploité par cet accès est déjà établi, cet envoi étant précédé d'une procédure d'établissement dudit canal de signalisation de l'accès, si ce canal n'était pas établi.

Par contre, s'il n'existe pas d'accès qui présente alors les caractéristiques indiquées ci-dessus, il est prévu qu'une seconde opération soit réalisée par les moyens de sélection d'accès en liaison avec les autres moyens de gestion de l'autocommutateur qui a reçu la demande d'établissement, pour déterminer s'il existe un des accès de l'artère 2 dont le coût de la signalisation à la durée est nul, faute d'avoir un coût d'établissement nul, et si cet accès dispose d'un canal de signalisation déjà établi et un canal libre pour la communication à établir. Si tel est le cas, un tel accès est immédiatement choisi et les opérations d'envoi de signalisation d'établissement de communication sont réalisées, comme indiqué précédemment.

Une troisième opération est réalisée ensuite, s'il n'y a pas d'accès disponible qui présente les caractéristiques requises lors de la seconde opération et qui dispose d'un canal de communication libre. Elle a pour objet de déterminer s'il existe un accès dont le coût de signalisation à la durée, est nul et dont le canal de signalisation n'est pas établi. Si tel est le cas, cet accès est choisi et une procédure d'établissement de canal de signalisation est réalisée et suivie d'une procédure d'établissement de communication.

Si la troisième opération n'a pas permis d'établir une communication comme souhaité, une quatrième opération est réalisée pour trouver un accès dont le coût de signalisation à la durée est faible, dont le canal de signalisation est déjà établi et qui dispose d'un canal libre pour la communication à établir. En cas de succès, cet accès est choisi et la procédure d'établissement de communication est complétée.

En cas d'insuccès de la quatrième opération, une cinquième opération est initiée pour tenter de trouver un accès dont le coût de signalisation à la durée est faible et dont le canal de signalisation n'est pas établi. Si un tel accès est trouvé, il est choisi et des procédures d'établissement de canal de signalisation et d'établissement de communication sont réalisées.

En cas d'insuccès de cette cinquième opération, une opération supplémentaire est réalisée pour trouver parmi les accès à l'artère 2 qui ne répondent pas aux critères pris en compte pour les cinq opérations précédemment définies. Cette opération supplémentaire choisit parmi les accès restants qui sont donc des accès à coût élevé, en fonction de la durée supposée de la communication à établir, telle qu'évaluée de la manière indiquée plus haut. Ce choix tend à établir la communication par un accès par lequel transitent des communications supposées présenter des caractéristiques de durée équivalentes, de manière que, dans la mesure du possible, les longues communications soient regroupées sur un ou plusieurs mêmes accès et que les communications supposées courtes soient regroupées sur un ou plusieurs autres de ces accès à coût élevé. Suite à cette opération supplémentaire de sélection, le canal de signalisation est soit exploité pour l'établissement de la nouvelle communication, éventuellement après avoir été établi à cette occasion et une procédure d'établissement de communication est réalisée.

Cette opération supplémentaire permet donc de n'établir un accès coûteux qu'en cas de besoin impérieux, de l'exploiter le plus possible à pleine capacité, lorsqu'il est établi et de le fermer dès qu'il devient superflu.

Les moyens de sélection d'accès sont aussi prévus pour permettre de réserver plusieurs canaux de communication sur un accès pour des communications futures de longue durée, dans la mesure où cela est possible, à partir du moment où une communication de longue durée est déjà établie sur cet accès. De ce fait, les communications de longue durée tendent à être regroupées par accès. Si un tel regroupement n'est temporairement plus possible, il est prévu de sélectionner l'accès qui a au moins une voie de communication disponible et sur lequel il y a le plus de communications en cours pour une communication longue distance à établir.

## Revendications

1. Procédé de sélection d'un accès (A1,...,An) parmi plusieurs possibles sur une artère (2) à signalisation dynamique reliant deux autocommutateurs (1, 1') d'un réseau de télécommunications, caractérisé en ce qu'il prévoit que la sélection d'un accès pour une communication est effectuée dynamiquement en fonction de critères de coût d'établissement d'accès et d'un critère de coût à la durée de signalisation par accès.

2. Procédé, selon la revendication 1, dans lequel la sélection d'un accès pour une communication comporte une pluralité d'opérations successives visant à trouver un accès dont le coût d'établissement est le plus faible possible parmi plusieurs possibilités et prioritairement un accès qui, pour le niveau de coût le plus faible possible, présente un canal de signalisation déjà établi et dispose d'au moins un canal de communication disponible.

3. Procédé, selon la revendication 2, dans lequel il est prévu de sélectionner un accès qui, pour le niveau de coût le plus faible possible, présente un canal de signalisation à établir, à défaut d'avoir un tel canal de signalisation déjà établi.

4. Procédé, selon la revendication 3, dans lequel la sélection d'un accès est effectuée en fonction de la durée supposée de la communication à établir en fonction d'analyses préalables du trafic, pour les accès qui sont choisis à défaut d'un accès moins coûteux.

5. Procédé, selon l'une des revendications 1 à 3, dans lequel la sélection d'une voie de communication pour une communication, estimée de longue durée, entraîne la réservation de voies de communication, disponibles au niveau de cet accès, pour de futures communications de longue durée.
